# EUROPEAN PATENT APPLICATION

(11) **EP 4 557 828 A1**
(43) Date of publication of application: **21.05.2025**
(21) Application number: 22950757.9
(22) Date of filing: 15.07.2022
(51) Int. Cl.: H04W 36/00

(54) **PATH SWITCHING METHOD, APPARATUS, DEVICE, AND STORAGE MEDIUM**

(71) Applicant: Beijing Xiaomi Mobile Software Co., Ltd., Beijing 100085 (CN)
(72) Inventor: XIONG, Yi, Beijing 100085 (CN)
(74) Representative: Stöckeler, Ferdinand
(86) International application number: PCT/CN2022/106123
(87) International publication number: WO 2024/011639

(57) **Abstract**

The present disclosure provides a path switching method, an apparatus, a device, and a storage medium. The method comprises: receiving a request message sent by a source node, the request message being used for requesting a target node to perform path switching preparation (201a); and sending configuration information to a target relay UE (202a). The present disclosure involves a step of the target node performing relay configuration on the relay UE in a path switching process, and thus the method in the present disclosure can be applied to a path switching scenario related to inter-base station switching (inter-gNB), such that the path switching process involving the inter-base station switching (inter-gNB) can be successfully executed, service continuity of a UE to be switched is ensured, and a path switching failure or path switching time delay of the UE to be switched due to the fact that the relay UE is not configured is avoided.

## Description

### FIELD

The present invention relates to the field of communication technology, and more particularly to a method, device and apparatus for path handover, and a storage medium.

### BACKGROUND

In a communication system, a user equipment (UE) may be directly connected to a base station, or may not be directly connected to a base station, but communicate with the base station through the relay of another UE. The UE that is not connected to the base station is called a remote UE, the UE that provides the relay function is called a relay UE, and the remote UE and the relay UE communicate with each other via a sidelink (SL). A link where a UE is directly connected to a base station is called a direct link, while a link where a UE is connected to a base station via a relay UE is called an indirect link.

In the related art, handover will be performed for a connection path of a UE. In R18, inter-gNB path handover will be introduced, such as handover from an indirect link (remote UE <-> relay UE A <-> base station X) to a direct link (UE <-> base station Y); or handover from a direct link (UE <-> base station X) to an indirect link (remote UE <-> relay UE A <-> base station Y); or handover from an indirect link (remote UE <-> relay UE A <-> base station X) to an indirect link (remote UE <-> relay UE B <-> base station Y).

However, in the path handover, if the relay UE changes, the base station needs to configure the relay UE. Since the existing path handover process in the related art does not involve the change of the base station, the relay UE is always configured by the source base station in the related art. However, the above path handover processes all involve inter-gNB handover, so in the above path handover processes, signaling interactions are required between the source node and the target node, and the relay UE needs to be configured by the target base station instead of the source base station. Therefore, the method for path handover in the related art is not suitable for the above-mentioned path handover scenarios involving the inter-gNB handover.

### SUMMARY

The present invention proposes a method, device and apparatus for path handover and a storage medium, so as to provide a method for path handover suitable for a path handover scenario of inter-gNB handover.

In a first aspect, embodiments of the present invention provide a method a method for path handover, which is performed by a target node, and includes: receiving a request message sent by a source node, where the request message is configured to request the target node to prepare for path handover; and sending configuration information to a target relay UE.

In the present invention, a method for path handover is provided. The target node receives the request message sent by the source node, the request message is configured to request the target node to prepare for path handover; and the target node sends the configuration information to the target relay UE. It can be seen that embodiments of the present invention involve a step where the target node performs relay configuration for the relay UE in the path handover process, so that the method as described in the present invention is applicable to path handover scenarios involving inter-gNB handover, to enable the path handover process involving the inter-gNB handover to be successfully performed, ensure the service continuity of a UE for which handover is to be performed, and avoid the path handover failure of the UE for which the handover is to be performed due to the relay UE not being configured, or avoid path handover delay.

In a second aspect, embodiments of the present invention provide a method for path handover, which is performed by a relay UE, and includes: receiving configuration information sent by a target node; and sending first indication information to the target node. The first indication information indicates whether a target relay UE successfully completes relay configuration according to the configuration information.

In a third aspect, embodiments of the present invention provide a method for path handover, which is performed by a source node, and includes: sending a request message to a target node. The request message is configured to request the target node to prepare for path handover.

In a fourth aspect, embodiments of the present invention provide a communication device, which is configured in a target node, and includes a transceiver module. The transceiver module is configured to receive a request message sent by a source node, the request message is configured to request the target node to prepare for path handover; and the transceiver module is further configured to send configuration information to a target relay UE.

In a fifth aspect, embodiments of the present invention provide a communication device, which is configured in a relay UE, and includes a transceiver module configured to: receive configuration information sent by a target node; and send first indication information to the target node. The first indication information indicates whether a target relay UE successfully completes relay configuration according to the configuration information.

In a sixth aspect, embodiments of the present invention provide a communication device, which is configured in a source node, and includes a transceiver module configured to send a request message to a target node, and the request message is configured to request the target node to prepare for path handover.

In a seventh aspect, embodiments of the present invention provide a communication device, which includes a processor, and the processor, when calling computer programs in a memory, performs the method described in the first aspect.

In an eighth aspect, embodiments of the present invention provide a communication device, which includes a processor, and the processor, when calling computer programs in a memory, performs the method described in the second aspect.

In a ninth aspect, embodiments of the present invention provide a communication device, which includes a processor, and the processor, when calling computer programs in a memory, performs the method described in the third aspect.

In a tenth aspect, embodiments of the present invention provide a communication device, which includes: a processor; and a memory having stored therein computer programs. The processor is configured to execute the computer programs stored in the memory to cause the communication device to perform the method described in the first aspect.

In an eleventh aspect, embodiments of the present invention provide a communication device, which includes: a processor; and a memory having stored therein computer programs. The processor is configured to execute the computer programs stored in the memory to cause the communication device to perform the method described in the second aspect.

In a twelfth aspect, embodiments of the present invention provide a communication device, which includes: a processor; and a memory having stored therein computer programs. The processor is configured to execute the computer programs stored in the memory to cause the communication device to perform the method described in the third aspect.

In a thirteenth aspect, embodiments of the present invention provide a communication device, which includes: a processor; and an interface circuit. The interface circuit is configured to receive code instructions and transmit the code instructions to the processor, and the processor is configured to run the code instructions to cause the device to perform the method as described in the first aspect.

In a fourteenth aspect, embodiments of the present invention provide a communication device, which includes: a processor; and an interface circuit. The interface circuit is configured to receive code instructions and transmit the code instructions to the processor, and the processor is configured to run the code instructions to cause the device to perform the method as described in the second aspect.

In a fifteenth aspect, embodiments of the present invention provide a communication device, which includes: a processor; and an interface circuit. The interface circuit is configured to receive code instructions and transmit the code instructions to the processor, and the processor is configured to run the code instructions to cause the device to perform the method as described in the third aspect.

In a sixteenth aspect, embodiments of the present invention provide a communication system, and the system includes the communication device described in the fourth aspect to the communication device described in the sixth aspect, or the system includes the communication device described in the seventh aspect to the communication device described in the ninth aspect, or the system includes the communication device described in the tenth aspect to the communication device described in the twelfth aspect, or the system includes the communication device described in the thirteenth aspect to the communication device described in the fifteenth aspects.

In a seventeenth aspect, embodiments of the present invention provide a computer-readable storage medium for storing instructions used by the above-mentioned network device and/or the above-mentioned terminal. The instructions, when executed, cause the network device to perform the method described in the first aspect, and/or cause the terminal to perform the method described in the second aspect, and/or cause the terminal to perform the method described in the third aspect.

In an eighteenth aspect, the present invention also provides a computer program product including computer programs that, when run on a computer, cause the computer to perform the method described in any of the above-mentioned first to third aspects.

In a nineteenth aspect, the present invention provides a chip system, which includes at least one processor and at least one interface, for supporting a network device to implement functions involved in the method described in the first aspect, and/or supporting a terminal to implement functions involved in the method described in the second aspect, and/or supporting a terminal to implement functions involved in the method described in the third aspect, for example, for determining or processing at least one of data and information involved in the above methods. In a possible design, the chip system further includes a memory, and the memory is configured to store computer programs and data necessary for a source node and a secondary node. The chip system may be composed of chips, or may include a chip and other discrete devices.

In a twentieth aspect, the present invention provides a computer program that, when run on a computer, causes the computer to perform the method described in any of the above-mentioned first to third aspects.

### BRIEF DESCRIPTION OF THE DRAWINGS

These and/or other aspects and advantages of embodiments of the present invention will become apparent and more readily appreciated from the following descriptions made with reference to the drawings, in which:
FIG. 1 is a schematic architecture diagram of a communication system according to embodiments of the present invention;
FIG. 2a - FIG.2j are schematic flowcharts of a method for path handover according to another embodiment of the present invention;
FIG. 3 is a schematic flowchart of a method for path handover according to yet another embodiment of the present invention;
FIG. 4 is a schematic flowchart of a method for path handover according to yet another embodiment of the present invention;
FIG. 5 is schematic flowchart of a method for path handover according to another embodiment of the present invention;
FIG. 6 is a schematic flowchart of a method for path handover according to yet another embodiment of the present invention;
FIG. 7 is a schematic flowchart of a method for path handover according to yet another embodiment of the present invention;
FIG. 8 is a schematic flowchart of a method for path handover according to yet another embodiment of the present invention;
FIG. 9 is a schematic flowchart of a method for path handover according to yet another embodiment of the present invention;
FIG. 10a - FIG. 10e are schematic flowcharts of a method for path handover according to yet another embodiment of the present invention;
FIG. 11 is a schematic flowchart of a method for path handover according to yet another embodiment of the present invention;
FIG. 12 is a schematic block diagram of a communication device according to an embodiment of the present invention;
FIG. 13a - FIG. 13b are schematic block diagrams of a communication device according to another embodiment of the present invention;
FIG. 14 is a schematic block diagram of a communication device according to an embodiment of the present invention; and
FIG. 15 is a schematic block diagram of a chip according to an embodiment of the present invention.

### DETAILED DESCRIPTION

Reference will now be made in detail to illustrative embodiments of the present invention, examples of which are illustrated in the accompanying drawings. The following description refers to the accompanying drawings in which the same numbers in different drawings represent the same or similar elements unless otherwise represented. The implementations described in the following illustrative embodiments do not represent all implementations consistent with embodiments of the present invention. Instead, they are merely examples of device and methods consistent with some aspects of embodiments of the present invention as recited in the appended claims.

The terms used in the embodiments of the present invention are for the purpose of describing specific embodiments, but should not be construed to limit the embodiments of the present invention. As used in the embodiments of the present invention and the appended claims, "a/an", "said" and "the" in singular forms are intended to include plural forms, unless clearly indicated in the context otherwise. It should also be understood that, the term "and/or" used herein represents and contains any one or any possible combinations of one or more associated items listed.

It should be understood that, although terms such as "first," "second" and "third" may be used in the embodiments of the present invention for describing various information, these information should not be limited by these terms. These terms are used for distinguishing information of the same type from each other. For example, first information may also be referred to as second information, and similarly, the second information may also be referred to as the first information, without departing from the scope of the embodiments of the present invention. Depending on the context, the term "if" as used herein may be construed to mean "when" or "upon" or "in response to determining".

Embodiments of the present invention will be described in detail below, examples of which are shown in the accompanying drawings, in which the same or similar numbers represent the same or similar elements. The embodiments described below with reference to the accompanying drawings are illustrative, which are intended to explain the present invention, and shall not be construed to limit the present invention.

To facilitate understanding, terms involved in the present invention are first introduced.

### 1. Sidelink (SL)

A link for direct communication between terminals.

### 2. Remote UE

A UE that do not directly communicate with a base station, but communicate with the base station through other UEs.

### 3. Potential remote UE

A UE that may switch from a current direct link to an indirect link. That is, although it is currently connected to the base station directly, it may be indirectly connected to the base station through other UEs in the future.

### 4. Relay UE

A UE used to implement relay communication between other UEs and the base station.

It should be noted that the method for path handover according to any embodiment of the present invention may be performed alone, and any implementation manner in the embodiments may also be performed alone, or may be performed in combination with other embodiments, possible implementations in other embodiments, or any technical solution in the related art.

For better understanding of the method for path handover according to embodiments of the present invention, a communication system to which embodiments of the present invention are applicable is described first below.

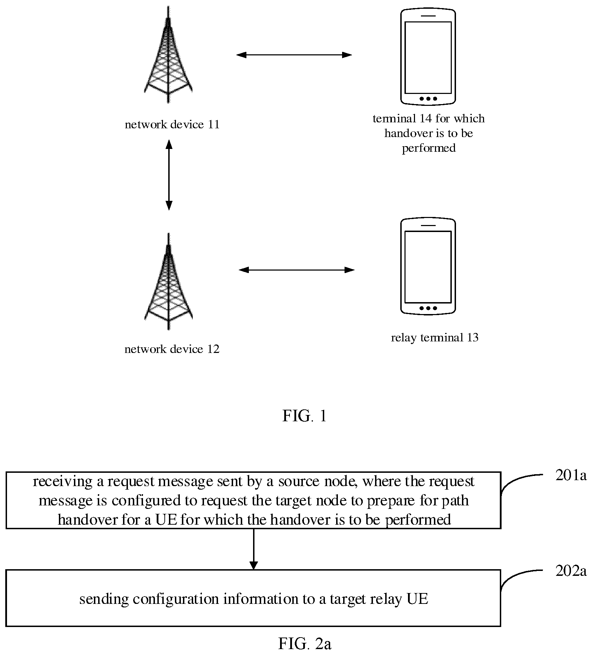

Referring to FIG. 1, FIG. 1 is a schematic architecture diagram of a communication system according to embodiments of the present invention. The communication system may include, but not limited to, a network device, a remote terminal, and a relay terminal. The number and forms of the devices shown in FIG. 1 are used as an example, and do not constitute a limitation on embodiments of the present invention. In actual applications, two or more network devices and two or more terminals may be included. As an example for illustration, the communication system shown in FIG. 1 includes one network device 11, one network device 12, one relay terminal 13, and one terminal 14 for which handover is to be performed.

It should be noted that the technical solutions as set forth in embodiments of the present invention may be applied to various communication systems, such as a long term evolution (LTE) system, a 5th generation (5G) mobile communication system, a 5G new radio (NR) system, or other new mobile communication systems in the future.

The network device 11 and the network device 12 in embodiments of the present invention are entities at a network side for sending or receiving signals. For example, the network device 11 may be an evolved NodeB (eNB), a transmission reception point (TRP), a next generation NodeB (gNB) in an NR system, a base station in other future mobile communication systems, or an access node in a wireless fidelity (WiFi) system. Embodiments of the present invention do not limit the specific technique and specific device form adopted by the network device. The network device according to embodiments of the present invention may be composed of a central unit (CU) and distributed units (DUs). The CU may also be called a control unit. The CU-DU structure allows to split protocol layers of the network device, such as a base station, functions of some protocol layers are centrally controlled in the CU, functions of some or all of the remaining protocol layers are distributed in the DUs, and the CU centrally controls the DUs.

The relay terminal 13 and the terminal 14 for which handover is to be performed in embodiments of the present invention may be entities at a user side for receiving or sending signals, such as mobile phones. The terminal may also be called a terminal device, a user equipment (UE), a mobile station (MS), a mobile terminal (MT), and so on. The terminal may be a device with a communication function, such as a car, a smart car, a mobile phone, a wearable device, a tablet Pad, a computer with a wireless transceiving function, a virtual reality (VR) terminal, an augmented reality (AR) terminal, a wireless terminal in an industrial control, a wireless terminal in a self-driving, a wireless terminal in a remote medical surgery, a wireless terminal in a smart grid, a wireless terminal in a transportation safety, a wireless terminal in a smart city, a wireless terminal in a smart home, etc. Embodiments of the present invention do not limit the specific technique and the specific device form adopted by the terminal.

It can be understood that the communication system described in the embodiments of the present invention is intended to illustrate the technical solutions as set forth in the embodiments of the present invention more clearly, and does not constitute a limitation on the technical solutions as set forth in the embodiments of the present invention. Those of ordinary skill in the art will know that with the evolution of the system architecture and the emergence of new service scenarios, the technical solutions as set forth in the embodiments of the present invention are also applicable to similar technical problems.

A method, device and apparatus for path handover as well as a storage medium according to embodiments of the present invention will be described in detail below with reference to the accompanying drawings.

FIG. 2a is a schematic flowchart of a method for path handover according to embodiments of the present invention, which is performed by a target node, as shown in FIG. 2a, the method for path handover may include the following steps.

In step 201a, a request message sent by a source node is received, and the request message is configured to request the target node to prepare for path handover for a UE for which the handover is to be performed.

In an embodiment of the present invention, both the source node and the target node mentioned above may be base stations.

In an embodiment of the present invention, the request message may be a handover request message. Furthermore, the request message may include identifier(s) of one or more target relay UEs recommended by the source node. The target relay UE may be a U2N relay UE or a U2U relay UE. The identifier of the target relay UE may be a corresponding identifier of the target relay UE in the source node, and/or a corresponding identifier of the target relay UE in the target node. The identifier of the target relay UE may be, for example, a UE XnAP ID.

In an embodiment of the present invention, the UE for which handover is to be performed may be a UE directly connected to the source node, or a UE indirectly connected to the source node. The request message requesting the target node to prepare for the path handover for the UE for which the handover is to be performed may be understood as: requesting the target node to perform relay configuration for the target relay UE, so that the UE for which the handover is to be performed can connect to the target node via the relay UE when it is to hand over to the target node.

In step 202a, configuration information is sent to a target relay UE.

In an embodiment of the present invention, the configuration information is specifically used for performing relay configuration on the target relay UE, and the configuration information may include one or more of:
relay operation associated configuration;
a configuration parameter for relay transmission;
a local identifier (ID) of a user equipment (UE) for which handover is to be performed;
a layer 2 (L2) ID of a UE for which handover is to be performed;
relay radio link (RL) channel configuration of a Uu link;
relay RL channel configuration of a PC5 link;
bearer mapping configuration of a Uu link; or
bearer mapping configuration of a PC5 link.

In an embodiment of the present invention, the relay operation associated configuration and the configuration parameter for relay transmission may be one or more of:
SL-L2RelayUEConfig, or
IE SL-L2RelayUEConfig, for configuring L2 U2N relay operation associated configuration used by a L2 U2N relay UE, such as SRAP-Config.

In addition, the relay operation associated configuration and the configuration parameter for relay transmission may mainly include: a list of remote UEs that need to be added (i.e., UEs for which handover is to be performed); and/or a list of remote UEs that need to be deleted, etc. The list of remote UEs may include any one or more of: configuration information of the remote UEs, identifiers of the remote UEs, sidelink relay adaptation protocol (SRAP) configuration of the remote UEs, etc.

Further, in an embodiment of the present invention, the manner for the target node to send the configuration information to the target relay UE may include one or more of:
sending the configuration information to target relay UE(s) corresponding to identifier(s) of all of the one or more target relay UEs in the request message;
sending the configuration information to target relay UE(s) corresponding to identifier(s) of a part of the one or more target relay UEs in the request message, where the identifier(s) of the part of the one or more target relay UEs is/are autonomously determined by the target node based on implementation, and the identifier(s) of the part of the one or more target relay UEs include(s) identifier(s) of at least one target relay UEs; or
autonomously determining one or more target relay UEs based on implementation, and sending the configuration information to the one or more target relay UEs autonomously determined, where the one or more target relay UEs autonomously determined by the target node based on implementation may be or may not be those corresponding to identifier(s) of target relay UE(s) included in the request message.

Furthermore, in an embodiment of the present invention, the manner for the target node to send the configuration information to the target relay UE may include: determining a connection state of the target relay UE, and directly sending the configuration information to the target relay UE, in response to the target relay UE being in a connected state; and/or establishing a radio resource control (RRC) connection with the target relay UE (for example, the target node may send an RRC establishment message and/or an RRC resume message to the target relay UE to establish the RRC connection with the target relay UE), and then sending the configuration information to the target relay UE, in response to the target relay UE being in an unconnected state (such as an idle state or an inactive state).

In an embodiment of the present invention, the target node may determine the connection state of the target relay UE via a signaling. Specifically, if the target node sends an RRC connection release message to the target relay UE before a current moment, and after the RRC connection release message is sent, the target node does not receive an RRC resume completion message and/or an RRC establishment completion message from the target relay UE, it is determined that the target relay UE is in an unconnected state. If the target node receives an RRC resume completion message and/or an RRC establishment completion message sent by the target relay UE before the current moment, and after the RRC resume completion message and/or the RRC establishment completion message is/are received, the target node does not send an RRC connection release message to the target relay UE, it is determined that the target relay UE is in the connected state.

In an embodiment of the present invention, the target node may carry the above configuration information in RRC reconfiguration information and send it to the target relay UE.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

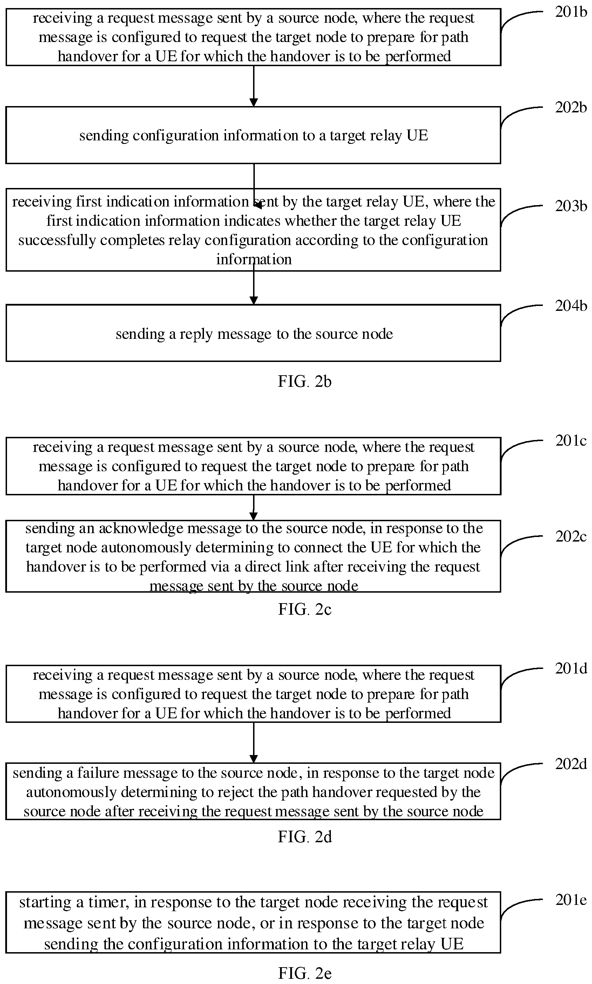

FIG. 2b is a schematic flowchart of a method for path handover according to embodiments of the present invention, which is performed by a target node, as shown in FIG. 2b, the method for path handover may include the following steps.

In step 201b, a request message sent by a source node is received, and the request message is configured to request the target node to prepare for path handover for a UE for which the handover is to be performed.

In step 202b, configuration information is sent to a target relay UE.

For details of the steps 201b-202b, reference may be made to the descriptions in the above embodiments.

In step 203b, first indication information sent by the target relay UE is received, and the first indication information indicates whether the target relay UE successfully completes relay configuration according to the configuration information.

In an embodiment of the present invention, the first indication information indicating that the target relay UE successfully completes the relay configuration according to the configuration information may be an RRC reconfiguration completion message, and the first indication information indicating that the target relay UE does not successfully complete the relay configuration according to the configuration information may be an RRC reestablishment request message.

In step 204b, a reply message is sent to the source node.

In an embodiment of the present invention, the reply message may include: an acknowledge message, indicating to the source node a successful request; and/or a failure message, indicating to the source node a failed request. The acknowledge message may be a handover request acknowledge message, and the failure message may be a handover preparation failure message.

It should be noted that, in an embodiment of the present invention, the manner for the target node to send the reply message to the source node may include any one or more of the following manners:
Manner 1: in response to the target node receiving the request message sent by the source node, the target node does not send the configuration information to the relay UE, but autonomously determines whether to accept the path handover requested by the request message, and sends the reply message to the source node based on a result autonomously determined.

Specifically, in response to the target node receiving the request message sent by the source node and autonomously determining to connect a UE for which the handover is to be performed via a direct link (that is, the UE for which the handover is to be performed is directly connected to the target node without via a relay UE), the acknowledge message is sent to the source node;

in response to the target node receiving the request message sent by the source node and autonomously determining to reject the path handover requested by the source node (that is, the UE for which the handover is to be performed is connected to the target node via a relay UE), the failure message is sent to the source node.

Manner 2: in response to the target node receiving the request message sent by the source node, the target node sends the configuration information to the relay UE to perform relay configuration for the target relay UE, and sends the reply message to the source node based on a result of the relay configuration.

Specifically, in an embodiment of the present invention, a timer may be set, and in response to the target node receiving the request message sent by the source node, or in response to the target node sending the configuration information to the target relay UE, the timer is started; and/or
in response to the target node receiving the first indication information sent by one or more target relay UEs, or in response to the target node sending the reply message to the source node, the timer is stopped.

In another embodiment of the present invention, a plurality of timers may be set. A timer may be set for each target relay UE to which the configuration information is sent. When the configuration information is sent to a target relay UE, the timer corresponding to the target relay UE is started, and when the first indication information sent by the target relay UE is received, the timer corresponding to the target relay UE is stopped.

In an embodiment of the present invention, the above manner of sending the reply message to the source node based on the result of the relay configuration may include one or more of the following manners:
in response to the target node receiving from one or more target relay UEs the first indication information indicating that the one or more target relay UEs successfully complete the relay configuration according to the configuration information, which means that the target node completes the relay configuration for the one or more target relay UE, sending the acknowledge message to the source node;
in response to the target node receiving from one or more target relay UEs the first indication information indicating that the one or more target relay UEs do not successfully complete the relay configuration according to the configuration information, but the target node autonomously determining to connect a UE for which handover is to be performed via a direct link, sending the acknowledge message to the source node;
in response to timer expiration, but the target node autonomously determining to connect a UE for which handover is to be performed via a direct link, sending the acknowledge message to the source node;
in response to the target node receiving from one or more target relay UEs the first indication information indicating that the one or more target relay UEs do not successfully complete the relay configuration according to the configuration information, sending the failure message to the source node; or
in response to timer expiration, sending the failure message to the source node.

It should be noted that, in an embodiment of the present invention, the acknowledge message may include one or more of:
second indication information, indicating a connection path to which the handover is allowed by the target node; the connection path to which the handover is allowed by the target node may be a direct link or an indirect link; or
an identifier of a target relay UE that successfully completes the relay configuration.

Further, in an embodiment of the present invention, the failure message may include one or more of:
third indication information, indicating a connection path of the target node to which handover fails; or
an identifier of a target relay UE that does not successfully complete the relay configuration.

In addition, in an embodiment of the present invention, after the source node receives the reply message sent by the target node, the source node can send a configuration message carrying path handover configuration to the UE for which the handover is to be performed based on the content carried in the reply message, so that the UE for which the handover is to be performed can complete the path handover based on the configuration message. The configuration message may include the connection path to which the handover is allowed by the target node and/or the identifier of the target relay UE that successfully completes the relay configuration.

To sum up, in the method for path handover according to embodiments of the present invention, the target node receives the request message sent by the source node, and the request message is configured to request the target node to prepare for the path handover; the target node sends the configuration information to the target relay UE, and receives the first indication information sent by the target relay UE, and the first indication information indicates whether the target relay UE successfully completes the relay configuration according to the configuration information; in addition, the target node also sends the reply message to the source node. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 2c is a schematic flowchart of a method for path handover according to embodiments of the present invention, which is performed by a target node, as shown in FIG. 2c, the method for path handover may include the following steps.

In step 201c, a request message sent by a source node is received, and the request message is configured to request the target node to prepare for path handover for a UE for which the handover is to be performed.

In step 202c, an acknowledge message is sent to the source node, in response to the target node autonomously determining to connect the UE for which the handover is to be performed via a direct link after receiving the request message sent by the source node.

For details of the steps 201c-202c, reference may be made to the descriptions in the above embodiments.

To sum up, in the method for path handover according to embodiments of the present invention, the target node receives the request message sent by the source node, and the request message is configured to request the target node to prepare for the path handover; the target node sends the configuration information to the target relay UE, and receives the first indication information sent by the target relay UE, and the first indication information indicates whether the target relay UE successfully completes the relay configuration according to the configuration information; in addition, the target node also sends the reply message to the source node. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 2d is a schematic flowchart of a method for path handover according to embodiments of the present invention, which is performed by a target node, as shown in FIG. 2d, the method for path handover may include the following steps.

In step 201d, a request message sent by a source node is received, and the request message is configured to request the target node to prepare for path handover for a UE for which the handover is to be performed.

In step 202d, a failure message is sent to the source node, in response to the target node autonomously determining to reject the path handover requested by the source node after receiving the request message sent by the source node.

For details of the steps 201d-202d, reference may be made to the descriptions in the above embodiments.

To sum up, in the method for path handover according to embodiments of the present invention, the target node receives the request message sent by the source node, and the request message is configured to request the target node to prepare for the path handover; the target node sends the configuration information to the target relay UE, and receives the first indication information sent by the target relay UE, and the first indication information indicates whether the target relay UE successfully completes the relay configuration according to the configuration information; in addition, the target node also sends the reply message to the source node. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

Further, in an embodiment of the present invention, a timer may be defined, and a starting moment and a stopping moment of the timer may be defined, so that the target node determines when to send the acknowledge message to the source node or when to send the failure message to the source node based on the timer. The following FIG. 2e to FIG. 2j show timer related embodiments.

FIG. 2e is a schematic flowchart of a method for path handover according to embodiments of the present invention, which is performed by a target node, as shown in FIG. 2e, the method for path handover may include a following step.

In step 201e, in response to the target node receiving the request message sent by the source node, or in response to the target node sending the configuration information to the target relay UE, the timer is started.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

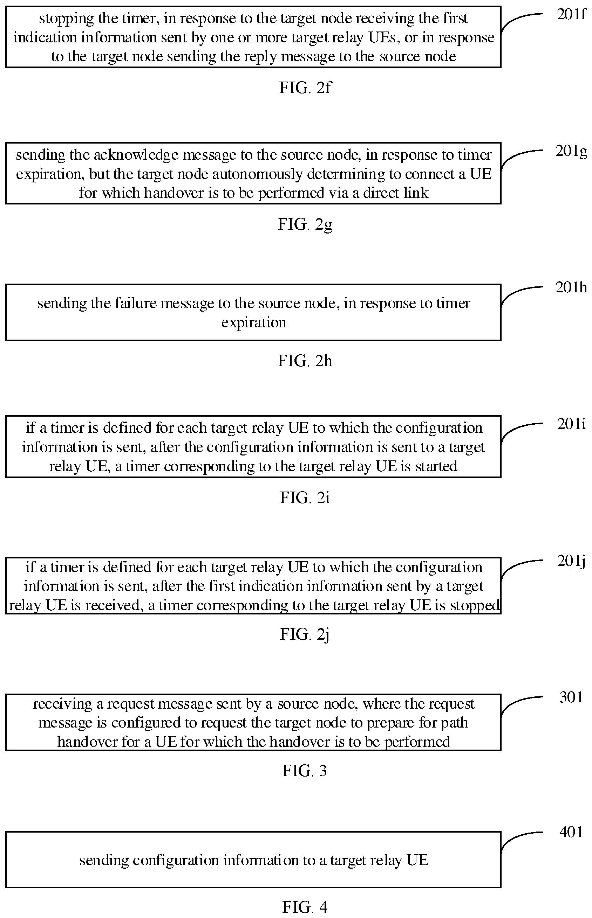

FIG. 2f is a schematic flowchart of a method for path handover according to embodiments of the present invention, which is performed by a target node, as shown in FIG. 2f, the method for path handover may include a following step.

In step 201f, in response to the target node receiving the first indication information sent by one or more target relay UEs, or in response to the target node sending the reply message to the source node, the timer is started.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 2g is a schematic flowchart of a method for path handover according to embodiments of the present invention, which is performed by a target node, as shown in FIG. 2g, the method for path handover may include a following step.

In step 201g, in response to timer expiration, but the target node autonomously determining to connect a UE for which handover is to be performed via a direct link; the acknowledge message is sent to the source node.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 2h is a schematic flowchart of a method for path handover according to embodiments of the present invention, which is performed by a target node, as shown in FIG. 2h, the method for path handover may include a following step.

In step 201h, in response to timer expiration, the failure message is sent to the source node.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 2i is a schematic flowchart of a method for path handover according to embodiments of the present invention, which is performed by a target node, as shown in FIG. 2i, the method for path handover may include a following step.

In step 201i, if a timer is defined for each target relay UE to which the configuration information is sent, after the configuration information is sent to a target relay UE, a timer corresponding to the target relay UE is started.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 2j is a schematic flowchart of a method for path handover according to embodiments of the present invention, which is performed by a target node, as shown in FIG. 2j, the method for path handover may include a following step.

In step 201j, if a timer is defined for each target relay UE to which the configuration information is sent, after the first indication information sent by a target relay UE is received, a timer corresponding to the target relay UE is stopped.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 3 is a schematic flowchart of a method for path handover according to embodiments of the present invention, which is performed by a target node, as shown in FIG. 3, the method for path handover may include a following step.

In step 301, a request message sent by a source node is received, and the request message is configured to request the target node to prepare for path handover for a UE for which the handover is to be performed.

For details of the step 301, reference may be made to the descriptions in the above embodiments.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 4 is a schematic flowchart of a method for path handover according to embodiments of the present invention, which is performed by a target node, as shown in FIG. 3, the method for path handover may include a following step.

In step 401, configuration information is sent to a target relay UE.

For details of the step 401, reference may be made to the descriptions in the above embodiments.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

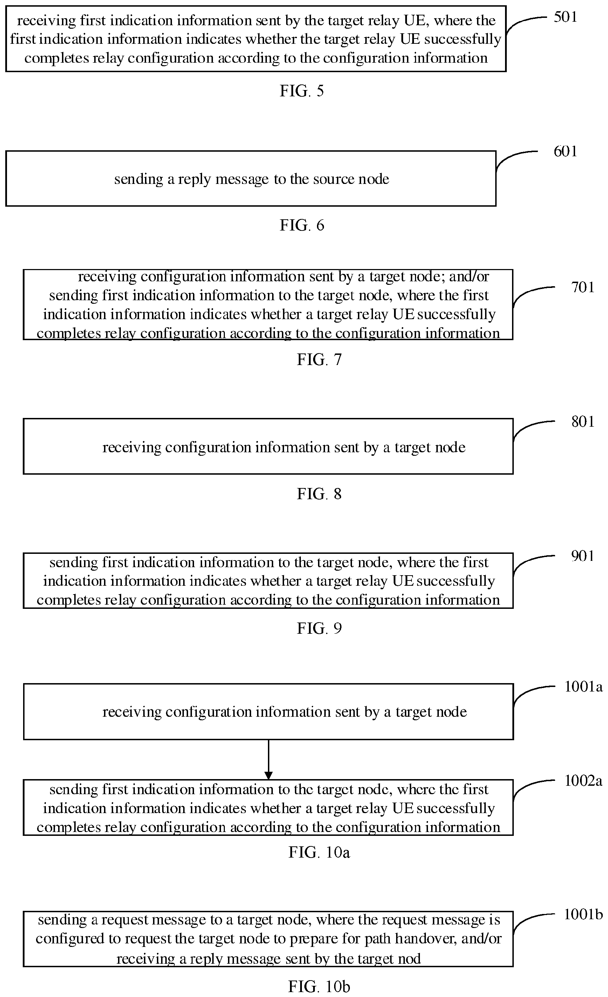

FIG. 5 is a schematic flowchart of a method for path handover according to embodiments of the present invention, which is performed by a target node, as shown in FIG. 3, the method for path handover may include a following step.

In step 501, first indication information sent by the target relay UE is received, and the first indication information indicates whether a target relay UE successfully completes relay configuration according to the configuration information.

For details of the step 501, reference may be made to the descriptions in the above embodiments.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 6 is a schematic flowchart of a method for path handover according to embodiments of the present invention, which is performed by a target node, as shown in FIG. 3, the method for path handover may include a following step.

In step 601, a reply message is sent to the source node.

For details of the step 601, reference may be made to the descriptions in the above embodiments.

To sum up, in the method for path handover according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 7 is a schematic flowchart of a method for path handover according to embodiments of the present invention, which is performed by a relay UE, as shown in FIG. 7, the method for path handover may include a following step.

In step 701, configuration information sent by a target node is received; and/or first indication information is sent to the target node, and the first indication information indicates whether the target relay UE successfully completes relay configuration according to the configuration information.

For details of the step 701, reference may be made to the descriptions in the above embodiments.

To sum up, in the method for path handover according to embodiments of the present invention, the target relay UE receives the configuration information sent by the target node; and/or the target relay UE sends the first indication information to the target node, and the first indication information indicates whether the target relay UE successfully completes the relay configuration according to the configuration information. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 8 is a schematic flowchart of a method for path handover according to embodiments of the present invention, which is performed by a relay UE, as shown in FIG. 8, the method for path handover may include a following step.

In step 801, configuration information sent by a target node is received.

For details of the step 801, reference may be made to the descriptions in the above embodiments.

To sum up, in the method for path handover according to embodiments of the present invention, the target relay UE receives the configuration information sent by the target node. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 9 is a schematic flowchart of a method for path handover according to embodiments of the present invention, which is performed by a relay UE, as shown in FIG. 9, the method for path handover may include a following step.

In step 901, first indication information is sent to the target node, and the first indication information indicates whether the target relay UE successfully completes relay configuration according to the configuration information.

For details of the step 901, reference may be made to the descriptions in the above embodiments.

To sum up, in the method for path handover according to embodiments of the present invention, the target relay UE sends the first indication information to the target node, and the first indication information indicates whether the target relay UE successfully completes the relay configuration according to the configuration information. As can be seen, embodiments of the present invention involve the interaction steps between the target node and the source node, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 10a is a schematic flowchart of a method for path handover according to embodiments of the present invention, which is performed by a relay UE, as shown in FIG. 10a, the method for path handover may include at least one of following steps.

In step 1001a, configuration information sent by a target node is received.

In step 1002a, first indication information is sent to the target node, and the first indication information indicates whether the target relay UE successfully completes relay configuration according to the configuration information.

For details of the steps 1001a-1002a, reference may be made to the descriptions in the above embodiments.

To sum up, in the method for path handover according to embodiments of the present invention, the target relay UE receives the configuration information sent by the target node; and then the target relay UE sends the first indication information to the target node, and the first indication information indicates whether the target relay UE successfully completes the relay configuration according to the configuration information. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 10b is a schematic flowchart of a method for path handover according to embodiments of the present invention, which is performed by a source node, as shown in FIG. 10b, the method for path handover may include at least one of following steps.

In step 1001b, a request message is sent to a target node, and the request message is configured to request the target node to prepare for the path handover; and/or a reply message sent by the target node is received.

For details of the step 1001b, reference may be made to the descriptions in the above embodiments.

To sum up, in the method for path handover according to embodiments of the present invention, the source node sends the request message to the target node to request the target node to prepare for the path handover, and/or the source node receives the reply message sent by the target node. As can be seen, embodiments of the present invention involve interactive steps between the target node and the source node in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

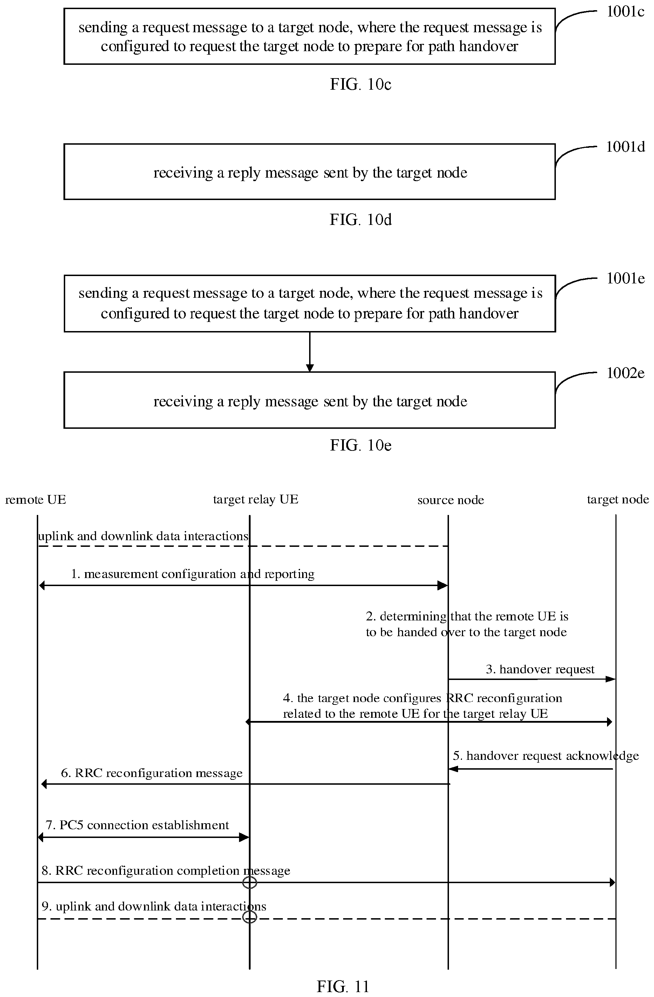

FIG. 10c is a schematic flowchart of a method for path handover according to embodiments of the present invention, which is performed by a source node, as shown in FIG. 10c, the method for path handover may include at least one of following steps.

In step 1001c, a request message is sent to a target node, and the request message is configured to request the target node to prepare for the path handover

For details of the step 1001c, reference may be made to the descriptions in the above embodiments.

To sum up, in the method for path handover according to embodiments of the present invention, the source node sends the request message to the target node to request the target node to prepare for the path handover. As can be seen, embodiments of the present invention involve interactive steps between the target node and the source node in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 10d is a schematic flowchart of a method for path handover according to embodiments of the present invention, which is performed by a source node, as shown in FIG. 10d, the method for path handover may include at least one of following steps.

In step 1001d, a reply message sent by the target node is received.

For details of the step 1001d, reference may be made to the descriptions in the above embodiments.

To sum up, in the method for path handover according to embodiments of the present invention, the source node receives the reply message sent by the target node. As can be seen, embodiments of the present invention involve interactive steps between the target node and the source node in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

FIG. 10e is a schematic flowchart of a method for path handover according to embodiments of the present invention, which is performed by a source node, as shown in FIG. 10e, the method for path handover may include at least one of following steps.

In step 1001e, a request message is sent to a target node, and the request message is configured to request the target node to prepare for the path handover.

In step 1002e, a reply message sent by the target node is received.

For details of the steps 1001e-1002e, reference may be made to the descriptions in the above embodiments.

To sum up, in the method for path handover according to embodiments of the present invention, the source node sends the request message to the target node to request the target node to prepare for the path handover, and the source node receives the reply message sent by the target node. As can be seen, embodiments of the present invention involve interactive steps between the target node and the source node in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

In the following, detailed interactions of the target node, the source node, the remote UE (i.e., the above UE for which the handover is to be performed), and target relay UE in the path handover process of the inter-gNB handover will be described. FIG. 11 is a schematic flowchart of a method for path handover according to embodiments of the present invention, as shown in FIG. 11, the flow of the method includes one or more of the following steps.

In an embodiment, the execution order of the following steps is not limited by the present invention, and any combination and execution manner are within the scope of protection of the present invention.

In step 1, measurement configuration and reporting are performed between the remote UE and the source node.

In step 2, the source node determines that the remote UE is to be handed over to the target node.

In step 3, the source node sends a handover request message to the target node, and the handover request message may include one or more target relay UEs recommended by the source node.

In step 4, the target node configures RRC reconfiguration related to the remote UE for the target relay UE, that is, performs relay configuration on the target relay UE. The remote UE is a potential remote UE. After the target relay UE receives the RRC reconfiguration from the target node, it can perform remote UE configuration according to the configuration information (such as the configuration information carried in the RRC reconfiguration), and when the configuration is completed, it replies an RRC reconfiguration completion message to the target node.

In step 5, in response to receiving the RRC reconfiguration completion message from the target relay UE, and/or in response to completing handover preparation for the remote UE, the target node sends a handover request acknowledge message to the source node.

In step 6, the source node sends an RRC reconfiguration message carrying path handover configuration to the remote UE, and the RRC reconfiguration message may include the identifier of the target relay UE and/or the configuration information.

In step 7, the remote UE establishes a PC5 connection with the target relay UE based on the RRC reconfiguration message to realize an indirect connection with the target node.

In step 8, the remote UE sends an RRC reconfiguration completion message to the target node via the relay UE.

In step 9, the remote UE performs uplink and downlink data interactions with the target node via the relay UE.

Optional implementation manners of the methods described above with reference to FIG. 1 to FIG. 6 are described below from the perspective of the target node as examples. Any of the following implementation manners may be performed alone or in combination with other implementation manners.

1. The target node receives the request message sent by the source node

1.1. As an example, the request message is configured to request resource preparation for path handover. As an example, the request message may be a handover request message.

2. Based on the point 1, the configuration information is sent to the target relay UE after receiving the request message.

2.1. The configuration information is sent to relay UEs corresponding to all target relay UE identifiers included in the request message as described in point 1.

2.2. The configuration information is sent to relay UE(s) corresponding to some (at least one) of relay UE identifiers included in the request message as described in point 1. The specific target relay UE(s) to which the configuration information is sent is/are determined by the target node based on implementation.

2.3. The target node determines which possible (at least one) target relay UE to send the configuration information based on implementation.

For example, the relay UE may be a U2N relay UE or a U2U relay UE.

For example, the source node and the target node may be gNBs.

3. Based on any one of the points 1-2, the configuration information includes relay operation associated configuration.

3.1. As an example, the relay transmission is provided for the remote UE that performs path handover as described in the point 1. In order to ensure the remote UE to perform path handover to switch to a connection with the target node via the target relay UE, the target node needs to send the configuration information to the target relay UE.

3.2. As an example, the configuration information may include one or more of the local ID and/or L2 ID of the remote UE, relay RL channel configuration of Uu and PC5, or bearer mapping configuration.

3.3. As an example, the configuration information includes relay operation associated configuration. For the remote UE in a connected state included therein, the network provides a configuration parameter for relay transmission.

3.4. As an example, the configuration information may be sl-L2RelayUE-Config, which may be represented by IE SL-L2RelayUE-Config-r17.

4. Based on the above point 2, the configuration information is included in the RRC reconfiguration information.

5. Based on either point 2 or point 4, sending the configuration information to the target relay UE includes:
5.1. in response to the target relay UE being a UE in a connected state, the target node sends an RRC reconfiguration message containing the configuration information to the target relay UE for relay UE configuration.
5.2. in response to the target relay UE being a UE in an idle or inactive state, the target node sends an RRC establishment message to the target relay UE to establish an RRC connection for the target relay UE, and then sends the configuration information to the target relay UE to perform the relay UE configuration.

6. Based on point 1, in response to receiving the request message sent by the source node, the target node sends a reply message to the source node. The reply message includes:
6.1. The reply message may be an acknowledge message (response message) informing the source node of the resources prepared by the target node for the path handover or a failure message (rejection message).
6.1.1. As an example, the response message (acknowledge message) may be a handover request acknowledge message.
6.2. The reply message may be a failure message (rejection message) informing the source node that the path handover preparation fails or the path handover is rejected.
6.2.1. As an example, the failure message (rejection message) may be a handover preparation failure message.

7. Based on point 1, when the target node receives the request message sent by the source node, or when the target node sends the configuration information to the target relay UE, the timer is started.

8. Based on point 7, when the timer expires, the failure message is sent to the source node, or if the target node decides to connect the remote UE through a direct link, it sends the acknowledge message to the source node.

9. Based on point 7, when the target node receives a message indicating that the configuration succeeds or fails from at least one (some/all) target relay UEs, or when the target node sends the reply message as described in point 6, the timer is stopped.

9.1. As an example, a timer may be set for each relay UE to which the configuration information is sent. After the configuration information is sent to the target relay UE, the timer is started, and when a message indicating that the configuration succeeds or fails is received from the relay UE, the timer is stopped.

9.2. As an example, only one timer may be set. When the target node receives the request message sent by the source node, the timer is started. When the target node receives the message indicating that the configuration succeeds or fails from at least one (some/all) target relay UEs, the timer is stopped.

10. Based on point 6, the target node sends the acknowledge message to the source node, which includes one or more of the following cases:
10.1. When the target node receives the message indicating that the configuration succeeds from at least one (some/all) target relay UEs, it sends the acknowledge message to the source node. As an example, the message indicating that the configuration succeeds may be an RRC reconfiguration completion message.
10.2. Alternatively, if the target node decides to connect the remote UE through a direct link, it sends the acknowledge message to the source node.

The target relay UE is a target relay UE to which the configuration information is sent as described in point 2.

As an example, the acknowledge message may include an indication of direct connection or indirect connection, and may also include the identifier of the target relay UE.

11. Based on point 6, the target node sends the failure message to the source node, which includes one or more of the following cases:
11.1. When the target node receives the message indicating that the configuration fails from at least one (some/all) target relay UEs, it sends the failure message to the source node. As an example, the message indicating that the configuration fails may be an RRC reestablishment request message.
11.2. In response to timer expiration, the failure message is sent to the source node.

The target relay UE is a target relay UE to which the configuration information is sent as described in point 2.

As an example, the failure message may include an indication of direct connection failure or indirect connection failure, and may also include the identifier of the target relay UE for which the configuration fails.

12. After the source node receives the acknowledge message sent by the target node, the source node sends a configuration message carrying the path handover configuration to the remote UE.

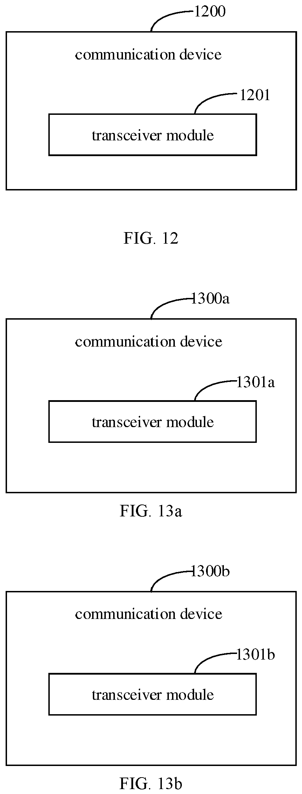

FIG. 12 is a schematic block diagram of a communication device according to embodiments of the present invention, as shown in FIG. 12, the device may include a transceiver module configured to receive a request message sent by a source node, and the request message is configured to request the target node to prepare for path handover; and the transceiver module is further configured to send configuration information to a target relay UE.

To sum up, in the communication device according to embodiments of the present invention, the target node receives the request message sent by the source node, and the request message is configured to request the target node to prepare for the path handover; and the target node also sends the configuration information to the target relay UE. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

Optionally, in an embodiment of the present invention, the transceiver module is further configured to: receive first indication information sent by the target relay UE, and send a reply message to the source node. The first indication information indicates whether the target relay UE successfully completes relay configuration according to the configuration information.

Optionally, in an embodiment of the present invention, the configuration information includes at least one of:
relay operation associated configuration;
a configuration parameter for relay transmission;
a local identifier (ID) of a user equipment (UE) for which handover is to be performed;
a layer 2 (L2) ID of a UE for which handover is to be performed;
relay radio link (RL) channel configuration of a Uu link;
relay RL channel configuration of a PC5 link;
bearer mapping configuration of a Uu link; or
bearer mapping configuration of a PC5 link.

Optionally, in an embodiment of the present invention, the transceiver module is further configured to perform at least one of:
send the configuration information to target relay UE(s) corresponding to identifier(s) of all of the one or more target relay UEs in the request message;
send the configuration information to target relay UE(s) corresponding to identifier(s) of a part of the one or more target relay UEs in the request message; or
autonomously determine one or more target relay UEs based on implementation, and send the configuration information to the one or more target relay UEs autonomously determined.

Optionally, in an embodiment of the present invention, the transceiver module is further configured to:
determine a connection state of the target relay UE, and
directly send the configuration information to the target relay UE, in response to the target relay UE being in a connected state; and/or
establish a radio resource control (RRC) connection for the target relay UE, and send the configuration information to the target relay UE, in response to the target relay UE being in an unconnected state.

Optionally, in an embodiment of the present invention, the reply message includes: an acknowledge message, indicating to the source node a successful request; or a failure message, indicating to the source node a failed request.

Optionally, in an embodiment of the present invention, the transceiver module is further configured to perform at least one of:
send the acknowledge message to the source node, in response to the target node autonomously determining to connect a UE for which handover is to be performed via a direct link after receiving the request message sent by the source node; or
send the failure message to the source node, in response to the target node autonomously determining to reject the path handover requested by the source node after receiving the request message sent by the source node.

Optionally, in an embodiment of the present invention, the transceiver module is further configured to perform at least one of:
start a timer, in response to the target node receiving the request message sent by the source node, or in response to the target node sending the configuration information to the target relay UE; or
stop the timer, in response to the target node receiving the first indication information sent by one or more target relay UEs, or in response to the target node sending the reply message to the source node.

Optionally, in an embodiment of the present invention, the transceiver module is further configured to perform at least one of:
send the acknowledge message to the source node, in response to the target node receiving from one or more target relay UEs the first indication information indicating that the one or more target relay UEs successfully complete the relay configuration according to the configuration information;
send the acknowledge message to the source node, in response to the target node receiving from one or more target relay UEs the first indication information indicating that the one or more target relay UEs do not successfully complete the relay configuration according to the configuration information, but the target node autonomously determining to connect a UE for which handover is to be performed via a direct link;
send the acknowledge message to the source node, in response to timer expiration, but the target node autonomously determining to connect a UE for which handover is to be performed via a direct link;
send the failure message to the source node, in response to the target node receiving from one or more target relay UEs the first indication information indicating that the one or more target relay UEs do not successfully complete the relay configuration according to the configuration information; or
send the failure message to the source node, in response to timer expiration.

Optionally, in an embodiment of the present invention, the acknowledge message includes at least one of:
second indication information, indicating a connection path to which handover is allowed by the target node; or
an identifier of a target relay UE that successfully completes the relay configuration.

Optionally, in an embodiment of the present invention, the failure message includes at least one of:
third indication information, indicating a connection path of the target node to which handover fails; or
an identifier of a target relay UE that does not successfully complete the relay configuration.

Optionally, in an embodiment of the present invention, the connection path includes at least one of:
a direct link; or
an indirect link.

FIG. 13a is a schematic block diagram of a communication device according to embodiments of the present invention, as shown in FIG. 13a, the device may include a transceiver module configured to: receive configuration information sent by a target node; and send first indication information to the target node. The first indication information indicates whether a target relay UE successfully completes relay configuration according to the configuration information.

To sum up, in the communication device according to embodiments of the present invention, the target relay UE receives the configuration information sent by the target node; and/or the target relay UE sends the first indication information to the target node, and the first indication information indicates whether the target relay UE successfully completes the relay configuration according to the configuration information. As can be seen, embodiments of the present invention involve the step of the relay configuration performed by the target node for the relay UE in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

Optionally, in an embodiment of the present invention, the configuration information includes at least one of:
relay operation associated configuration;
a configuration parameter for relay transmission;
a local identifier (ID) of a UE for which handover is to be performed;
a layer 2 (L2) ID of a UE for which handover is to be performed;
relay radio link (RL) channel configuration of a Uu link;
relay RL channel configuration of a PC5 link;
bearer mapping configuration of a Uu link; or
bearer mapping configuration of a PC5 link.

Optionally, in an embodiment of the present invention, the transceiver module is further configured to:
directly receive the configuration information sent by the target node, in response to the relay UE being in a connected state; or
establish an RRC connection with the target node, and receive the configuration information sent by the target node, in response to the relay UE being in an unconnected state.

FIG. 13b is a schematic block diagram of a communication device according to embodiments of the present invention, as shown in FIG. 13b, the device may include a transceiver module configured to send a request message to a target node, and the request message is configured to request the target node to prepare for path handover.

To sum up, in the communication device according to embodiments of the present invention, the source node sends the request message to the target node to request the target node to prepare for the path handover, and/or the source node receives the reply message sent by the target node. As can be seen, embodiments of the present invention involve interactive steps between the target node and the source node in the path handover process, so that the method as described in the present invention is applicable to path handover scenarios involving inter-gNB handover, to enable the path handover process involving the inter-gNB handover to be successfully performed, ensure the service continuity of the UE for which the handover is to be performed, avoid the path handover failure of the UE for which the handover is to be performed due to the relay UE not being configured, and avoid the path handover delay.

Optionally, in an embodiment of the present invention, the device is further configured to: receive a reply message sent by the target node.

Optionally, in an embodiment of the present invention, the request message includes identifier(s) of one or more target relay UEs.

Optionally, in an embodiment of the present invention, the reply message includes: an acknowledge message, indicating to the source node a successful request; or a failure message, indicating to the source node a failed request.

Optionally, in an embodiment of the present invention, the acknowledge message includes at least one of:
second indication information, indicating a connection path to which handover is allowed by the target node;
or an identifier of a target relay UE that successfully completes relay configuration.

Optionally, in an embodiment of the present invention, the failure message includes at least one of:
third indication information, indicating a connection path of the target node to which handover fails; or
an identifier of a target relay UE that does not successfully complete relay configuration.

Optionally, in an embodiment of the present invention, the connection path includes at least one of:
a direct link; or
an indirect link.

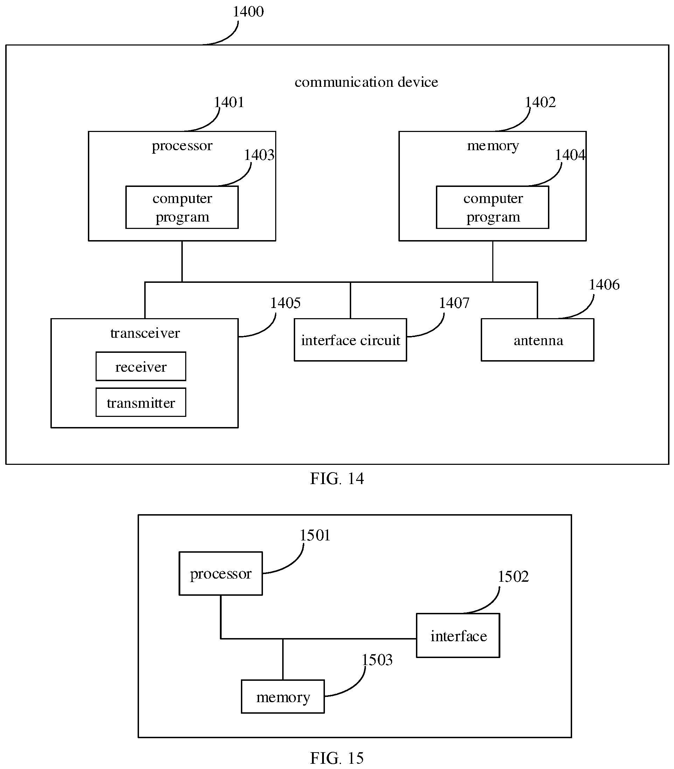

Referring to FIG. 14, FIG. 14 is a schematic block diagram of a communication device 1400 according to embodiments of the present invention. The communication device 1400 may be a network device, may also be a terminal, may also be a chip, a chip system, or a processor that supports the network device to implement the above method, or may also be a chip, a chip system, or a processor that supports the terminal to implement the above method. The device may be used to implement the methods as described in the above method embodiments, and for details, reference may be made to the descriptions on the above method embodiments.

The communication device 1400 may include one or more processors 1401. The processor 1401 may be a general-purpose processor or a special-purpose processor. For example, it may be a baseband processor or a central processing unit. The baseband processor may be configured to process a communication protocol and communication data, and the central processing unit may be configured to control a communication device (such as a base station, a baseband chip, a terminal, a terminal chip, a DU or a CU, etc.), execute computer programs, and process data of computer programs.

Optionally, the communication device 1400 may further include one or more memories 1402 that may have stored therein computer programs 1404. The processor 1401 executes the computer programs 1404 to cause the communication device 1400 to implement the methods as described in the above method embodiments. Optionally, the memory 1402 may have stored therein data. The communication device 1400 and the memory 1402 may be set separately or integrated together.

Optionally, the communication device 1400 may further include a transceiver 1405 and an antenna 1406. The transceiver 1405 may be called a transceiving unit, a transceiving machine, a transceiving circuit or the like, for implementing a transceiving function. The transceiver 1405 may include a receiver and a transmitter. The receiver may be called a receiving machine, a receiving circuit or the like, for implementing a receiving function. The transmitter may be called a sending machine, a sending circuit or the like for implementing a sending function.

Optionally, the communication device 1400 may further include one or more interface circuits 1407. The interface circuit 1407 is configured to receive code instructions and transmit the code instructions to the processor 1401. The processor 1401 runs the code instructions to enable the communication device 1400 to execute the methods as described in the foregoing method embodiments.

In an implementation, the processor 1401 may include the transceiver configured to implement receiving and sending functions. For example, the transceiver may be a transceiving circuit, an interface, or an interface circuit. The transceiving circuit, the interface or the interface circuit configured to implement the receiving and sending functions may be separated or may be integrated together. The above transceiving circuit, interface or interface circuit may be configured to read and write codes/data, or the above transceiving circuit, interface or interface circuit may be configured to transmit or transfer signals.

In an implementation, the processor 1401 may have stored therein computer programs 1403, and the computer programs 1403, when running on the processor 1401, cause the communication device 1400 to perform the method described in the above method embodiments. The computer programs 1403 may be solidified in the processor 1401, and in this case, the processor 1401 may be implemented by hardware.

In an implementation, the communication device 1400 may include a circuit, and the circuit may implement the sending, receiving or communicating function in the foregoing method embodiments. The processor and the transceiver described in the present invention may be implemented on an integrated circuit (IC), an analog IC, a radio frequency integrated circuit (RFIC), a mixed-signal IC, an application specific integrated circuit (ASIC), a printed circuit board (PCB), an electronic device, etc. The processor and the transceiver may also be manufactured using various IC process technologies, such as a complementary metal oxide semiconductor (CMOS), an nMetal-oxide-semiconductor (NMOS), a P-type metal oxide semiconductor (also called positive channel metal oxide semiconductor, PMOS), a bipolar junction transistor (BJT), a bipolar CMOS (BiCMOS), silicon germanium (SiGe), gallium arsenide (GaAs), etc.

The communication device described in the above embodiments may be the network device or the terminal, but the scope of the communication device described in the present invention is not limited thereto, and a structure of the communication device is not limited by FIG. 14. The communication device may be a stand-alone device or may be a part of a larger device. For example, the communication device may be:
(1) a stand-alone integrated circuit (IC), or a chip, or a chip system or a subsystem;
(2) a set of one or more ICs, optionally, the set of ICs may also include a storage component for storing data and computer programs;
(3) an ASIC, such as a modem;
(4) a module that may be embedded in other devices;
(5) a receiver, a terminal, an intelligent terminal, a cellular phone, a wireless device, a handheld machine, a mobile unit, a vehicle device, a network device, a cloud device, an artificial intelligence device, etc.;
(6) others.

For the case where the communication device may be a chip or a chip system, reference may be made to a schematic structural diagram of the chip shown in FIG. 15. The chip shown in FIG. 15 includes a processor 1501 and an interface 1502. In the chip, one or more processors 1501 may be provided, and a plurality of interfaces 1502 may be provided.

Optionally, the chip further includes a memory 1503 for storing necessary computer programs and data.

Those skilled in the art may also understand that various illustrative logical blocks and steps listed in embodiments of the present invention may be implemented by electronic hardware, computer software, or a combination thereof. Whether such functions are implemented by hardware or software depends on specific applications and design requirements of an overall system. For each specific application, those skilled in the art may use various methods to implement the described functions, but such implementation should not be understood as beyond the protection scope of embodiments of the present invention.

The present invention also provides a readable storage medium having stored therein instructions that, when executed by a computer, cause functions of any of the above method embodiments to be implemented.

The present invention also provides a computer program product that, when executed by a computer, causes functions of any of the above method embodiments to be implemented.

The above embodiments may be implemented in whole or in part by software, hardware, firmware or any combination thereof. When implemented using software, the above embodiments may be implemented in whole or in part in a form of the computer program product. The computer program product includes one or more computer programs. When the computer programs are loaded and executed on the computer, all or part of the processes or functions according to embodiments of the present invention will be generated. The computer may be a general-purpose computer, a special-purpose computer, a computer network, or other programmable devices. The computer programs may be stored in a computer-readable storage medium or transmitted from one computer-readable storage medium to another computer-readable storage medium. For example, the computer programs may be transmitted from one website site, computer, server or data center to another website site, computer, server or data center in a wired manner (such as via a coaxial cable, an optical fiber, a digital subscriber line (DSL)) or a wireless manner (such as via infrared, wireless, or microwave, etc.). The computer-readable storage medium may be any available medium that can be accessed by the computer, or a data storage device such as a server or a data center integrated by one or more available media. The available medium may be a magnetic medium (for example, a floppy disk, a hard disk, or a magnetic tape), an optical medium (for example, a high-density digital video disc (DVD)), or a semiconductor medium (for example, a solid state disk (SSD)), etc.

Those of ordinary skill in the art can understand that the first, second, and other numeral numbers involved in the present invention are only for convenience of description, and are not intended to limit the scope of embodiments of the present invention, nor are they intended to represent a sequential order.

The term "at least one" used in the present invention may also be described as one or more, and the term "a plurality of" may cover two, three, four or more, which are not limited in the present invention. In embodiments of the present invention, for a certain kind of technical features, the technical features in this kind of technical features are distinguished by terms like "first", "second", "third", "A", "B", "C" and "D", etc., and these technical features described with the "first", "second", "third", "A", "B", "C" and "D" have no order of priority and have no order of size.

The correspondence shown in each table in the present invention may be configured or predefined. The values of various information in each table are just examples, and may be configured as other values, which are not limited in the present invention. When configuring a correspondence between the information and various parameters, it is not necessary to configure all the correspondences shown in the tables. For example, the correspondences shown in some rows of a table in the present invention may not be configured. For another example, appropriate deformations or adjustments (such as splitting, merging, and so on) can be made based on the above table. The names of parameters shown in the titles of the above tables may also adopt other names understandable by the communication device, and the values or representations of the parameters may also be other values or representations understandable by the communication device. When the above tables are implemented, other data structures may also be used, for example, arrays, queues, containers, stacks, linear tables, pointers, linked lists, trees, graphs, structural body, classes, heaps, or hash tables may be used.

The term "predefinition" in the present invention may be understood as definition, definition in advance, storage, pre-storage, pre-negotiation, pre-configuration, curing, or pre-firing.

Those of ordinary skill in the art can appreciate that the units and algorithm steps of various examples described in conjunction with embodiments disclosed herein may be implemented by electronic hardware, or a combination of computer software and electronic hardware. Whether these functions are executed by hardware or software depends on the specific applications and design constraints of the technical solution. For individual particular applications, those skilled in the art may use different methods to implement the described functions, but such implementation should not be considered beyond the scope of the present invention.

Those skilled in the art can clearly understand that for the convenience and brevity of the description, the specific working process of the above-described system, device and unit may refer to the corresponding process in the foregoing method embodiments, which will not be repeated here.

The above only describes some specific embodiments of the present invention, but the protection scope of the present invention is not limited thereto. Any changes or substitutions that are conceivable to those skilled in the art within the technical scope of the present invention should fall within the protection scope of the present invention. Therefore, the protection scope of the present invention should be determined by the protection scope of the claims.

## Claims

1. A method for path handover, performed by a target node, comprising:
receiving a request message sent by a source node, wherein the request message is configured to request the target node to prepare for the path handover;
sending configuration information to a target relay user equipment (UE).

2. The method for path handover according to claim 1, further comprising:
receiving first indication information sent by the target relay UE, wherein the first indication information indicates whether the target relay UE successfully completes relay configuration according to the configuration information;
sending a reply message to the source node.

3. The method for path handover according to claim 2, wherein the request message comprises identifier(s) of one or more target relay UEs.

4. The method for path handover according to claim 2, wherein the configuration information comprises at least one of:
relay operation associated configuration;
a configuration parameter for relay transmission;
a local identifier (ID) of a user equipment (UE) for which handover is to be performed;
a layer 2 (L2) ID of a UE for which handover is to be performed;
relay radio link (RL) channel configuration of a Uu link;
relay RL channel configuration of a PC5 link;
bearer mapping configuration of a Uu link; or
bearer mapping configuration of a PC5 link.

5. The method for path handover according to claim 3, wherein sending the configuration information to the target relay UE comprises at least one of:
sending the configuration information to target relay UE(s) corresponding to identifier(s) of all of the one or more target relay UEs in the request message;
sending the configuration information to target relay UE(s) corresponding to identifier(s) of a part of the one or more target relay UEs in the request message; or
autonomously determining one or more target relay UEs based on implementation, and sending the configuration information to the one or more target relay UEs autonomously determined.

6. The method for path handover according to claim 1, wherein sending the configuration information to the target relay UE comprises:
determining a connection state of the target relay UE, and
directly sending the configuration information to the target relay UE, in response to the target relay UE being in a connected state; and/or
establishing a radio resource control (RRC) connection for the target relay UE, and sending the configuration information to the target relay UE, in response to the target relay UE being in an unconnected state.

7. The method for path handover according to claim 3, wherein the reply message comprises:
an acknowledge message, indicating to the source node a successful request; or
a failure message, indicating to the source node a failed request.

8. The method for path handover according to claim 7, wherein sending the reply message to the source node comprises at least one of:
sending the acknowledge message to the source node, in response to the target node autonomously determining to connect a UE for which handover is to be performed via a direct link after receiving the request message sent by the source node; or
sending the failure message to the source node, in response to the target node autonomously determining to reject the path handover requested by the source node after receiving the request message sent by the source node.

9. The method for path handover according to claim 7, further comprising at least one of:
starting a timer, in response to the target node receiving the request message sent by the source node, or in response to the target node sending the configuration information to the target relay UE; or
stopping the timer, in response to the target node receiving the first indication information sent by one or more target relay UEs, or in response to the target node sending the reply message to the source node.

10. The method for path handover according to claim 9, wherein sending the reply message to the source node comprises at least one of:
sending the acknowledge message to the source node, in response to the target node receiving from one or more target relay UEs the first indication information indicating that the one or more target relay UEs successfully complete the relay configuration according to the configuration information;
sending the acknowledge message to the source node, in response to the target node receiving from one or more target relay UEs the first indication information indicating that the one or more target relay UEs do not successfully complete the relay configuration according to the configuration information, but the target node autonomously determining to connect a UE for which handover is to be performed via a direct link;
sending the acknowledge message to the source node, in response to timer expiration, but the target node autonomously determining to connect a UE for which handover is to be performed via a direct link;
sending the failure message to the source node, in response to the target node receiving from one or more target relay UEs the first indication information indicating that the one or more target relay UEs do not successfully complete the relay configuration according to the configuration information; or
sending the failure message to the source node, in response to timer expiration.

11. The method for path handover according to claim 7, wherein the acknowledge message comprises at least one of:
second indication information, indicating a connection path to which handover is allowed by the target node; or
an identifier of a target relay UE that successfully completes the relay configuration.

12. The method for path handover according to claim 7, wherein the failure message comprises at least one of:
third indication information, indicating a connection path of the target node to which handover fails; or
an identifier of a target relay UE that does not successfully complete the relay configuration.

13. The method for path handover according to claim 11 or 12, wherein the connection path comprises at least one of:
a direct link; or
an indirect link.

14. A method for path handover, performed by a relay user equipment (UE), comprising:
receiving configuration information sent by a target node;
sending first indication information to the target node, wherein the first indication information indicates whether a target relay UE successfully completes relay configuration according to the configuration information.

15. The method for path handover according to claim 14, wherein the configuration information comprises at least one of:
relay operation associated configuration;
a configuration parameter for relay transmission;
a local identifier (ID) of a UE for which handover is to be performed;
a layer 2 (L2) ID of a UE for which handover is to be performed;
relay radio link (RL) channel configuration of a Uu link;
relay RL channel configuration of a PC5 link;
bearer mapping configuration of a Uu link; or
bearer mapping configuration of a PC5 link.

16. The method for path handover according to claim 14, wherein receiving the configuration information sent by the target node comprises:
directly receiving the configuration information sent by the target node, in response to the relay UE being in a connected state;
establishing a radio resource control (RRC) connection with the target node, and receiving the configuration information sent by the target node, in response to the relay UE being in an unconnected state.

17. A method for path handover, performed by a source node, comprising:
sending a request message to a target node, wherein the request message is configured to request the target node to prepare for path handover.

18. The method according to claim 17, further comprising:
receiving a reply message sent by the target node.

19. The method for path handover according to claim 17, wherein the request message comprises identifier(s) of one or more target relay UEs.

20. The method for path handover according to claim 18, wherein the reply message comprises:
an acknowledge message, indicating to the source node a successful request; or
a failure message, indicating to the source node a failed request.

21. The method for path handover according to claim 17, wherein the acknowledge message comprises at least one of:
second indication information, indicating a connection path to which handover is allowed by the target node; or
an identifier of a target relay UE that successfully completes relay configuration.

22. The method for path handover according to claim 17, wherein the failure message comprises at least one of:
third indication information, indicating a connection path of the target node to which handover fails; or
an identifier of a target relay UE that does not successfully complete relay configuration.

23. The method for path handover according to claim 21 or 22, wherein the connection path comprises at least one of:
a direct link; or
an indirect link.

24. A communication device, configured in a target node, comprising:
a transceiver module, configured to receive a request message sent by a source node, wherein the request message is configured to request the target node to prepare for path handover; and
wherein the transceiver module is further configured to send configuration information to a target relay user equipment (UE).

25. A communication device, configured in a relay user equipment (UE), comprising:
a transceiver module, configured to:
receive configuration information sent by a target node; and
send first indication information to the target node, wherein the first indication information indicates whether a target relay UE successfully completes relay configuration according to the configuration information.

26. A communication device, configured in a source node, comprising:
a transceiver module, configured to send a request message to a target node, wherein the request message is configured to request the target node to prepare for path handover.

27. A communication device, comprising:
a processor; and
a memory, having stored therein computer programs,
wherein the processor is configured to execute the computer programs stored in the memory to cause the device to perform the method according to any one of claims 1 to 13, the method according to any one of claims 14 to 16, or the method according to any one of claims 17 to 23.

28. A communication device, comprising:
a processor; and
an interface circuit, configured to receive code instructions and transmit the code instructions to the processor;
wherein the processor is configured to run the code instructions to perform the method according to any one of claims 1 to 13, the method according to any one of claims 14 to 16, or the method according to any one of claims 17 to 23.

29. A computer-readable storage medium, having stored therein instructions that, when executed, cause the method according to any one of claims 1 to 13, the method according to any one of claims 14 to 16, or the method according to any one of claims 17 to 23 to be performed.
